Europäisches Patentamt

European Patent Office

Office européen des brevets

(11) Veröffentlichungsnummer: **0 001 400**
**B1**

(12) **EUROPÄISCHE PATENTSCHRIFT**

(45) Veröffentlichungstag der Patentschrift:
**04.02.81**

(51) Int. Cl.³: **C 08 G 63/48, C 09 D 3/34**

(21) Anmeldenummer: **78100859.4**

(22) Anmeldetag: **09.09.78**

(54) **Lufttrocknende Alkydharze.**

(30) Priorität: **22.09.77 DE 2742584**

(43) Veröffentlichungstag der Anmeldung:
**18.04.79 Patentblatt 79/8**

(45) Bekanntmachung des Hinweises auf die Patenterteilung:
**04.02.81 Patentblatt 81/5**

(84) Benannte Vertragsstaaten:
**BE CH DE FR GB NL SE**

(56) Entgegenhaltungen:
**DE-A-2 637 955**
**US-A-2 729 609**
**US-A-4 061 411**

(73) Patentinhaber: **BAYER AG, Zentralbereich Patente, Marken und Lizenzen, D-5090 Leverkusen 1, Bayerwerk (DE)**

(72) Erfinder: **Dhein, Rolf, Dr., Deswatinesstrasse 30, D-4150 Krefeld (DE)**
Erfinder: **Ruf, Günter, Dr., Buschstrasse 163, D-4150 Krefeld (DE)**
Erfinder: **Fleiter, Lothar, Dr., Bärenstrasse 7, D-4150 Krefeld (DE)**
Erfinder: **Beckers, Johannes, Bartzweg 1, D-4152 Kempen 4 (DE)**

## Lufttrocknende Alkydharze

Lufttrocknende, mit ungesättigten Fettsäuren und weiteren Monocarbonsäuren modifizierte Alkydharze sind seit langem bekannt und stellen im Bereich der Autoreparatur- und Industrielackierung die bedeutendste Bindemittelklasse dar.

Zur Verbesserung der Verarbeitung und der Lackqualität wie der Antrocknung, der Durchtrocknung, der Überspritzbarkeit, der Wetterhaltung oder des Weißtons werden ständig neue Systeme und Mischungsverhältnisse der Bindemittelbestandteile entwickelt. Trotz dieser Verbesserungen besteht immer noch ein Bedarf an weiter verbesserten Produkten.

Es ist bekannt, daß z. B. Benzoesäuren die Alkalifestigkeit und Härte von Überzügen aus Fettsäure-modifizierten Alkydharzen verbessern und kürzere Trockenzeiten ergeben (US-Patent 29 15 488 Heyden Newport Chemical). Durch die Verwendung von p-tert.-Butylbenzoesäure ist eine Verbesserung der Vergilbungsfestigkeit, der Glanzhaltung sowie der Lösungsmittelverträglichkeit erreichbar (US 26 18 616 Shell). In sehr kurzöligen Benzoesäure-modifizierten Alkydharzen konnte durch ein ausgewähltes Verhältnis von Pentaerythrit zu Trimethyloläthan sowie die Verwendung von Ricinensäuren eine weitere Verkürzung der Trockenzeit erzielt werden (US-PS 33 29 634 Commercial Solvents).

Kurzölige Alkydharze mit weniger als 40% Fettsäuren, wie sie in den beiden zuletzt zitierten Patentschriften genannt sind, haben jedoch für den Bereich lufttrocknender Autoreparatur- und Industrielackierungen aufgrund ihrer mangelnden Elastizität, ihrer geringeren Vernetzungsfähigkeit und dadurch einer weniger guten Chemikalien- bzw. Lösungsmittelfestigkeit sowie schlechterer Überspritzbarkeit keine große Bedeutung als Alleinbindemittel erhalten. Ein höherer Fettsäureanteil im Bindemittel macht sich dagegen neben einer besseren Vernetzung und Elastizität durch eine verbesserte Optik der daraus hergestellten Überzüge (Fülle, Verlauf, Brillanz) bemerkbar.

Beispiel 4 der US-Patentschrift 27 29 609 beschreibt die Herstellung eines kurzöligen Alkydharzes aus Phthalsäureanhydrid, Fumarsäure, 3.5-Di-tert.-butylbenzoesäure, Glycerin und dehydratisiertem Ricinusöl. Analytische Daten des dehydratisierten Ricinusöls werden nicht offenbart. Demnach unterscheiden sich die erfindungsgemäßen Alkydharze von dem des Beispiels 4 der US-Patentschrift 27 29 609 in zweifacher Hinsicht: erstens im Ölgehalt, zweitens durch eine spezielle Definition der einzusetzenden Fettsäuren. In diesem Zusammenhang sei auf unser Vergleichsbeispiel 1 verwiesen (Ricinenfettsäure ist das Dehydratisierungsprodukt der Ricinusölfettsäure), das — verglichen mit den erfindungsgemäßen Alkydharzen — bezüglich Durchtrocknung, Abklebbarkeit, Benzinfestigkeit und Überspritzbarkeit jeweils schlechtere Werte ergibt.

Konjugierte Doppelbindungen-enthaltende Fettsäuregemische (Konjuen-Säuren) — hergestellt durch Dehydratisierung von Ricinolsäure und/oder durch katalytische Isomerisierung von natürlichen Fettsäuren bzw. deren Ester — wurden wiederholt für die Herstellung lufttrocknender Bindemittel empfohlen (z. B. Paint Manufacture, Mai 1977, S. 28). Genauere Untersuchungen kamen jedoch zu dem Schluß, daß die Konjuen-Fettsäuren ihre optimale Wirkung in einem Alkydharz mit 60% Öllänge entfalten, wobei nur ein geringer Anteil der konjugierten Doppelbindungen trans-trans-Anordnung aufweist, damit eine ausreichende Durchtrocknung erzielt wird (vgl. Paint, Oil and Colour Journal, Mai 1964, S. 1194; Fette, Seifen, Anstrichmittel 68. 1966 [4], S. 279). Rheineck und Zimmermann haben bei der Untersuchung von Glycerinestern der Octadecadiencarbonsäuren gefunden, daß für eine kurze Trocknungszeit 35 bis 45% der doppelt ungesättigten Reste konjugierte Diene sein müssen (Paint, Oil and Colour Journal, Juli 1964, S. 26; Der Farbenchemiker — Fette, Seifen, Anstrichmittel — 71, 1969, S. 7). Die Öle selbst und die langöligen Alkydharze mit über 50% Fettsäuren trocknen jedoch noch zu langsam und haben nur eine unzureichende Härte und eine unzureichende Wetterfestigkeit.

Nun sind aber durchaus auch mittelölige Alkydharze mit 40 bis 50% Fettsäuregehalt auf Basis konjugiert ungesättigter Konjuen-Fettsäuren bekannt, doch werden sie offenbar aufgrund einer unzureichenden Durchtrocknung nur für Einbrennlacke empfohlen (Fette, Seifen, Anstrichmittel 68, 1966 [12], 1038; Firmenschrift der Harburger Fettchemie »Isomerginsäuren«, September 1971, S. 5).

Im folgenden werden doppelt-ungesättigte Fettsäuren als »Diensäuren«, doppelt-ungesättigte Fettsäuren mit konjugierten Doppelbindungen als »Konjuen-Säuren« und einfach-ungesättigte Fettsäuren als »Monoensäuren« bezeichnet.

Gegenstand der Erfindung sind mittelölige lufttrocknende Alkydharze aus Polycarbonsäuren, aromatischen Monocarbonsäuren, Fettsäuren und Polyolen, die pro 100 Gewichtsteile (lösungsmittelfreies) Harz 5 bis 15, vorzugsweise 6 bis 14, Gewichtsteile aromatische Monocarbonsäuren und 41 bis 52, vorzugsweise 43 bis 49, Gewichtsteile Fettsäuren einkondensiert enthalten, dadurch gekennzeichnet, daß 30 bis 95, vorzugsweise 40 bis 80, Gew.-% der Fettsäuren Diensäuren und der Rest Monoen- und gesättigte Säuren sind und daß 100 Gewichtsteile Harz 10 bis 33, vorzugsweise 15 bis 31, Gewichtsteile Konjuensäuren enthalten, wobei das Gewichtsverhältnis von Monoen- zu Konjuensäuren 0.3 bis 1.3, vorzugsweise 0.45 bis 1.1, ist.

Besonders bevorzugt liegen pro 100 Gew.-Teile Harz 44 bis 48 Gew.-Teile Fettsäuren und 10 bis 13 Gew.-Teile aromatische Monocarbonsäuren vor, das Harz enthält 22 bis 30 Gew.-Teile Konjuensäuren und das Monoen/Konjuen-Verhältnis ist 0,43 bis 0,63.

Bei Einhalten dieser Bedingungen erhält man mittelölige Alkydharze, die luftvernetzend sind und gute Eigenschaften besitzen; aufgrund der bisherigen Erkenntnisse war dagegen nur eine unzureichende Luftvernetzung zu erwarten und ein Optimum der Eigenschaften nur bei Verwendung von Konjuenfettsäuren mit wenig trans-trans-Doppelbindungen (Fette, Seifen, Anstrichmittel 68, 1966 [4], S. 279) oder bei Verwendung von Fettsäuregemischen mit einem Konjugationsgrad von 35 bis 45% (Fette, Seifen, Anstrichmittel 71. 1969, S. 7). Außerdem war ein Einfluß des Monoensäurengehaltes nicht zu erwarten, da die Monoensäuren bislang immer zu den Vernetzungs-inaktiven Modifizierungsmitteln eines Alkydharzes gerechnet wurden (Kittel, Lehrbuch der Lacke und Beschichtungen, Bd. I/1, S. 188, Houben–Weyl XIV/2, S. 45).

Der Gesamtfettsäuregehalt der erfindungsgemäßen Alkydharze liegt im Bereich von 41 bis 52%, bezogen auf festes Alkydharz, und wird im wesentlichen durch die Faktoren Viskosität der Alkydharzlösung bzw. Festkörpergehalt der verarbeitungsfertigen Lacke, Elastizität, Fülle und Verlauf nach unten hin bzw. Härte und Trocknungsgeschwindigkeit nach oben hin begrenzt und ist abhängig vom jeweiligen Einsatzzweck des Alkydharzes.

Ein Gehalt von mindestens 15% Diensäuren im lösungsmittelfreien Alkydharz ist erforderlich, um den aus den erfindungsgemäßen Alkydharzen hergestellten Überzügen eine ausreichende Vernetzung und damit eine ausreichende Chemikalienfestigkeit zu verleihen; durch Dien-Säuregehalte über 40% wird keine Steigerung mehr bewirkt. Bei einem Gehalt an Konjuensäuren unter 10% macht sich die Steigerung der Vernetzungsgeschwindigkeit kaum noch bemerkbar, so daß Alkydharze mit langsamerer An- und Durchtrocknung resultieren; Produkte mit Konjuen-Säuregehalten über 33% dagegen erschweren die Herstellung der Alkydharze und führen zu unerwünscht hoher Viskosität. Liegt das Verhältnis von Monoensäuren zu Konjuensäuren unterhalb der erfindungsgemäßen Grenzen, so resultieren Alkydharze mit unzureichender Durchtrocknung, Abklebbarkeit, Benzinfestigkeit, Überspritzbarkeit und Härtung, steigt das Verhältnis von Monoensäuren zu Konjuensäuren über 1,3, so hat dies ebenfalls eine langsamere An- und Durchtrocknung sowie schlechtere Abklebbarkeit, Benzinfestigkeit und Überspritzbarkeit zu Folge.

Geeignete aromatische Monocarbonsäuren, die zur Steigerung der Härte des Überzuges in Mengen von 5 bis 15 Gew.-%, bezogen auf festes Alkydharz, mit eingesetzt werden, sind z. B. Benzoesäure, p-tert.-Butylbenzoesäure und andere Alkylbenzoesäuren; zur Einstellung spezieller Eigenschaften auch Naphthalincarbonsäuren, Benzoesäuren mit Substituenten, die keine Alkylreste darstellen und hydrierte Säuren.

Für die Herstellung von Polyestern übliche Polyole sind beispielsweise Diole, wie Äthylen- und Propylenglykol, Butandiol und Hexandiol sowie deren verzweigte und substituierte Isomeren, Triole wie Glycerin, Trimethyloläthan und dessen höhere Homologe, aber auch Hexantriole, tetrafunktionelle Alkohole wie z. B. Pentraerythrit oder durch Ätherbildung dimerisierte trifunktionelle Alkohole, etwa Bis-(trimethylolpropan), auch höherfunktionelle Alkohole wie Zuckeralkohole und durch Ätherbildung di- oder trimerisiertes Pentraerythrit können als Polyalkohole eingesetzt werden. Die Auswahl der Polyolkomponenten richtet sich u. a. nach dem gewünschten Gehalt an freien Hydroxylgruppen im fertigen Alkydharz, nach der Gesamtmenge an Monocarbonsäuren oder auch nach Kriterien wie Löslichkeit und Verdünnbarkeit des Alkydharzes; oftmals können auch durch die Kombination von unterschiedlichen Polyolen bestimmte Eigenschaften optimiert werden.

Als Polycarbonsäuren, die für die Herstellung der erfindungsgemäßen Alkydharze verwendet werden, kommen in Frage:

Aliphatische Dicarbonsäuren wie z. B. Adipinsäure, deren höhere und niedere Homologen sowie deren Alkyl-substituierte Derivate, cycloaliphatische Dicarbonsäuren wie z. B. Hexahydrophthalsäure, aromatische Dicarbonsäuren wie z. B. Phthalsäure(anhydrid), Iso- und Terephthalsäure, auch polycyclische aromatische Polycarbonsäuren wie z. B. Benzophenon-2,4'-dicarbonsäure. Bei olefinischen Polycarbonsäuren ist zu beachten, daß sie unter Umständen mit den konjugierten Fettsäuren reagieren können und sich einmal dadurch der Konjuengehalt verschieben kann, zum anderen Alkydharze mit unter Umständen erhöhten Molekulargewichten resultieren; unter Berücksichtigung dieser Besonderheit können auch z. B. Maleinsäure(anhydrid), Itaconsäure, Tetrahydrophthalsäure (+Derivate) sowie Bicyclo-2.2.1-hept-2-en-5,6-carbonsäure verwendet werden.

Zur Herstellung der Fettsäuregemische, die für die erfindungsgemäßen Alkydharze verwendet werden können, gibt es eine Reihe von Verfahren, die z. B. die katalytische Isomerisierung natürlicher Fettsäuregemische, gegebenenfalls in Form ihrer (Methyl)-ester einschließen. Dabei wählt man die Fettsäuregemische vorteilhafterweise so aus, daß sie — unter Berücksichtigung des erreichbaren Isomerisierungsgrades — bereits vor der Isomerisierung den für die Herstellung der erfindungsgemäßen Alkydharze erforderlichen Anteil an einfach-ungesättigten Carbonsäuren aufweisen. Als Beispiele seien hier genannt: Die Fettsäuregemische, die aus Soja-, Sonnenblumen-, Saflor-, Erdnuß-, Baumwollsaat-, Raps-, Mais-, Olivenöl aber auch bestimmten — evtl. vorbehandelten — tierischen Ölen oder Fetten gewonnen werden oder bei deren Verarbeitung anfallen.

Auch bestimmte, durch Dehydratisierung von Ricinusölfettsäuren — gegebenenfalls in Kombination mit Isomerisierungs- und/oder destillativen und/oder sonstigen Aufarbeitungsverfahren herstellbare Fettsäuregemische sind einsetzbar. Je nach Zusammensetzung der Fettsäuregemische kann es aber auch erforderlich sein, weitere Fettsäuregemische, gegebenenfalls auch solche, die keine Konjuensäuren enthalten, gegebenenfalls auch reine Fettsäuren wie Äthylhexansäure oder Isononansäure zuzusetzen, um die erfindungsgemäßen Bedingungen einzuhalten.

In den nachfolgenden Beispielen sind Teile (Tl.) immer Gewichtsteile.

Beispiel 1
Alkydharz mit einem Fettsäuregehalt
von 49%, einem Gehalt an Dien-
Fettsäuren von 23% und einem
Monoen-Konjuen-Verhältnis von 1,1

1339 Tl. konjugierte Soja-Fettsäure, 1150 Tl. Phthalsäureanhydrid, 1006 Tl. Pentaerythrit, 754 Tl. Rapsöl-Fettsäure, 361 Tl. Benzoesäure wurden gemeinsam unter Durchleiten von 6 l Stickstoff in einem 6-l-Remanit-Kessel mit Rührer und Destillationsbrücke in 90 min auf 140° C, dann in 8 Stdn. auf 220° C erhitzt. Nach weiteren 6 h betrug die Viskosität (DIN 53 211, 50% FG in Xylol) 31 sec. Die Temperatur wurde auf 200° C gesenkt; nach 3 Stdn. 200° C betrug die Viskosität 50 sec bei einer Säurezahl von 11. Nach Abkühlen auf 140° C wurde eine 100%ige Probe gezogen, deren Viskosität 66 sec und deren Säurezahl 8,5 betrug. Das restliche Alkydharz wurde mit Testbenzin auf 70% vorverdünnt. Die Viskosität, 40%ig in Testbenzin, betrug 57 sec.

Anschließend wurde aus dem vorgelösten Alkydharz eine Lieferform hergestellt, die 55 Tl. Feststoff, 35 Tl. Testbenzin und 10 Tl. Xylol enthielt.

Durch 2maliges Anreiben auf einer Einwalze mit Doppelbarren wurde daraus unter Zusatz von 65% Titandioxid RKB 2(R) (Bayer AG) ein Pigmentteig hergestellt, der eine Kornfeinheit von 0 – 10 μ aufwies. Nach Zugabe von 1,5 Tl. Butanonoxim, 55%ig in Benzin, 4,2 Tl. Äthylglykolacetat, 1 Tl. Cobaltoctoat (6% Co), 4,2 Tl. Bleioctoat (Pb 24) und 3 Tl. einer 1%igen Silikonöl-Lösung in Xylol wurde mit einem Lösungsmittelgemisch aus Testbenzin-Xylol 1 : 1 eine Viskosität (DIN 53 211) von 100 sec eingestellt. Dieser Weißlack wurde nach 24stündiger Reifezeit mit 180 μ Naßfilmdicke (ergibt 50 – 55 μ Trockenfilmdicke) auf Glasplatten aufgezogen bzw. nach dem Weiterverdünnen auf 20 sec auf Bleche aufgespritzt, die mit einem Permaloid-NC-Kombifüller grundiert waren, auch hier betrug die Schichtdicke 50 – 55 μ. Beurteilt wurden folgende Kriterien:

1. Trockenzeit:
bei 21 – 22° C und 60 – 65% rel. Luftfeuchte wurden im Abstand von jeweils 30 min die auf Glasplatten aufgezogenen Filme abgemustert;

festgehalten ist die Zeit bis zur Klebfreiheit der Filmoberfläche. Bei allen Beispielen und Vergleichsbeispielen betrug die Zeit bis zur Staubtrocknung (≙ Trocknungsgrad 1 nach DIN 53 150) 30 – 60 Min.

2. Nagelhärte:
a)   nach 16 h bei Raumtemperatur, Glasplatte
b)   nach 45 h bei Raumtemperatur, Glasplatte
c)   nach 16 h bei Raumtemperatur auf grundierten Blechen

Es wurde jeweils die Möglichkeit beurteilt, den Lack mit dem Fingernagel vom Untergrund zu lösen.

3. Pendelhärte:
nach König, gemessen in sec an den auf Glasplatten aufgezogenen Filmen nach

a)   16 h Raumtemperatur
b)   45 h Raumtemperatur

4. Durchtrocknung:
Nach Abheben des Filmes wurde der Trocknungsgrad der Filmunterseite beurteilt:

a)   nach 16 h Raumtemperatur
b)   nach 45 h Raumtemperatur

5. Abklebbarkeit:
Nach 16 h Trocknung bei Raumtemperatur wurde ein Kreppapier-Klebestreifen mit dem Daumen auf den Lackfilm (Glasplatte) mit einem Druck von 700 – 800 g 1 min lang angedrückt, danach wurde der Klebestreifen sofort entfernt und der verbleibende Abdruck visuell beurteilt:

a)   nach 15 min
b)   nach 30 min

6. Superbenzinfestigkeit:
Nach 16 h Trocknung bei Raumtemperatur wurde auf den Lackfilm (grundiertes Blech) ein mit Superkraftstoff getränkter Wattebausch gelegt. Nach einer Einwirkungszeit von 1 min wurde der Wattebausch entfernt und das Aussehen der Filmoberfläche nach einer Regenerationszeit von 30 min beurteilt.

7. Überspritzbarkeit:
Nach 16 h Trockenzeit bei Raumtemperatur wurden die Filme (grundierte Bleche) mit Schleifpapier der Körnung 360 naß geschliffen, nach dem Trocknen mit dem gleichen Lack des ersten Filmes (»mit sich selbst«) überspritzt und bei Raumtemperatur getrocknet. Das Aussehen der entstandenen neuen Oberfläche wurde visuell beurteilt.

Bei der Beurteilung wurde, soweit keine Meßgrößen angegeben sind, in 6 Grobstufen und jeweils 3 Zwischenstufen unterteilt: 0 = ausgezeichnet; 1 = sehr gut; 2 = gut; 3 = mäßig; 4 = schlecht; 5 = sehr schlecht. Zwischenstufen (als Beispiel) 2,3; 2,5; 2,8.

## Beispiel 2

Nach dem im Beispiel 1 beschriebenen Verfahren wurde aus den folgenden Komponenten ein Alkydharz hergestellt. 1543 Tl. konjugierte Sojafettsäure, 515 Tl. Sojafettsäure, 534 Tl. p-tert.-Butylbenzoesäure, 1020 Tl. Pentaerythrit, 1132 Tl. Phthalsäureanhydrid.

Das fertige Alkydharz wies folgende Kennzahlen auf: Säurezahl (bezogen auf Festharz) 8,5, Viskosität (40%ig in Testbenzin): 56 sec; das Verhältnis von Monoensäuren zu konjugierten Diensäuren ist 0,62, der Gehalt an Diensäuren beträgt 27,5%, der Gehalt an Konjuensäuren beträgt 18,5%.

## Beispiel 3

Nach dem im Beispiel 1 beschriebenen Verfahren wurde aus den folgenden Komponenten ein Alkydharz hergestellt: 2056 Tl. einer hochgradig konjugierten Sojafettsäure, 534 Tl. p-tert.-Butylbenzoesäure, 1020 Tl. Pentaerythrit, 1110 Tl. Phthalsäureanhydrid.

Das fertige Alkydharz wies folgende Kennzahlen auf: Säurezahl: 12,2; Viskosität (40%ig in Testbenzin): 88 sec, das Verhältnis von Monoensäuren zu konjugierten Diensäuren ist 0,51; der Gehalt an Diensäuren beträgt 29%, der Gehalt an Konjuensäuren beträgt 27,5%.

## Vergleichsbeispiel 1

Nach dem im Beispiel 1 beschriebenen Verfahren wurde aus den folgenden Komponenten ein Alkydharz hergestellt: 2056 Tl. Ricinen-Fettsäure, 534 Tl. p-tert.-Butylbenzoesäure, 1130 Tl. Phthalsäureanhydrid, 1020 Tl. Pentaerythrit. Das fertige Alkydharz wies folgende Kennzahlen auf: Säurezahl: 8,1; Viskosität (40%ig in Testbenzin): 75 sec; das Verhältnis von Monoensäuren zu konjugierten Diensäuren ist 0,21; der Gehalt an Diensäuren beträgt 39%, der Gehalt an Konjuensäuren beträgt 19,5%.

## Vergleichsbeispiel 2

Als weiterer Vergleich wurde ein handelsübliches Alkydharz auf Basis Sojaöl-Fettsäuren, Benzoesäure, Pentaerythrit, Phthalsäureanhydrid mit einem Fettsäuregehalt von 46% herangezogen.

Gaschromatographische Analysen der für die Beispiele und Vergleichsbeispiele eingesetzten Fettsäuren:

| Fettsäure | ges. Fettsäuren | Monoensäuren | Linolsäure 9.12 | Konjugierte*) Diensäuren | |
|---|---|---|---|---|---|
| Rapsöl-Fettsäure | 6 | 71 | 14 | 9 | (9) |
| konjugierte Sojafettsäure | 16 | 25 | 7 | 52 | (1) |
| hochkonjugierte Sojafettsäure | 8 | 30 | 3 | 59 | (2) |
| Ricinen-Fettsäure | 6 | 9 | 43 | 42 | (–) |
| Sojafettsäure | 18 | 23 | 57 | 2 | (2) |

*) einschließlich Linolensäuren (ungefährer Gehalt in Klammern)

| | Monoen-Konjuen Verhältnis | Dien-Säuren (%) | Konjuensäuren (%) | Säurezahl | Viskosität (sec) | Trocknungszeit | Nagelhärte | | | Pendelhärte | | Durchtrocknung | | Abklebbarkeit | | Benzinfestigkeit | Überspritzbarkeit |
|---|---|---|---|---|---|---|---|---|---|---|---|---|---|---|---|---|---|
| | | | | | | | a | b | c | a | b | a | b | a | b | | |
| Beispiel 1 | 1,1 | 23 | 16 | 8,2 | 57 | 3,5 | 2,0 | 1,5 | 2,5 | 18 | 20 | 1,3 | 0,5 | 2,0 | 0 | 2,0 | 0 |
| Beispiel 2 | 0,62 | 27,5 | 18,5 | 8,5 | 56 | 2,5 | 3,0 | 2,5 | 2,5 | 18 | 21 | 1,3 | 1,0 | 2,0 | 0 | 2,5 | 0 |
| Beispiel 3 | 0,51 | 29 | 27,5 | 12 | 88 | 3,5 | 2,5 | 2,0 | 2,0 | 18 | 21 | 1,3 | 0,8 | 0 | 0 | 3,0 | 0 |
| Vergleichsbeispiel 1 | 0,21 | 39 | 19,5 | 8,1 | 75 | 2,5 | 3,8 | 3,3 | 3,5 | 15 | 17 | 2,0 | 1,5 | 4,0 | 3,5 | 3,5 | 3,5 |
| Vergleichsbeispiel 2 | ./. | 26 | ./. | 5 | 70 | 3,5 | 3,8 | 3,0 | 3,8 | 14 | 17 | 3,0 | 2,0 | 4,5 | 4,0 | 5,0 | 4,0 |

## Patentansprüche

1. Mittelölige lufttrocknende Alkydharze aus Polycarbonsäuren, aromatischen Monocarbonsäuren, Fettsäuren und Polyolen, die pro 100 Gewichtsteile (lösungsmittelfreies) Harz 5 bis 15 Gewichtsteile aromatische Monocarbonsäuren und 41 bis 52 Gewichtsteile Fettsäuren einkondensiert enthalten, dadurch gekennzeichnet, daß 30 bis 95 Gew.-% der Fettsäuren Diensäuren und der Rest Monoen- und gesättigte Säuren sind und daß 100 Gewichtsteile Harz 10 bis 33 Gewichtsteile Konjuensäuren enthalten, wobei das Gewichtsverhältnis von Monoen- zu Konjuensäuren 0,3 bis 1,3 ist.

2. Alkydharze nach Anspruch 1, dadurch gekennzeichnet, daß sie pro 100 Gewichtsteile Harz 6 bis 14 Gewichtsteile aromatische Monocarbonsäuren einkondensiert enthalten.

3. Alkydharze nach Ansprüchen 1 und 2, dadurch gekennzeichnet, daß sie 43 bis 49 Gewichtsteile Fettsäuren einkondensiert enthalten.

4. Alkydharze nach Ansprüchen 1 – 3, dadurch gekennzeichnet, daß 40 bis 80 Gew.-% der Fettsäuren Diensäuren sind.

5. Alkydharze nach Ansprüchen 1 – 4, dadurch gekennzeichnet, daß 100 Gewichtsteile Harz 15 – 31 Gewichtsteile Konjuensäuren enthalten.

6. Alkydharze nach Ansprüchen 1 – 5, dadurch gekennzeichnet, daß das Gewichtsverhältnis von Monoen- zu Konjuensäuren 0.45 bis 1.1 ist.

7. Alkydharze nach Ansprüchen 1 – 5, dadurch gekennzeichnet, daß 100 Gewichtsteile Harz 44 bis 48 Gewichtsteile Fettsäuren und 10 bis 13 Gewichtsteile aromatische Monocarbonsäuren einkondensiert enthalten, wobei 100 Gewichtsteile Harz 22 bis 30 Gewichtsteile Konjuensäuren enthalten und das Gewichtsverhältnis von Monoen- zu Konjuensäuren 0.43 bis 0.63 ist.

## Claims

1. Middle oil, air-drying alkyd resins comprising polycarboxylic acids, aromatic monocarboxylic acids, fatty acids and polyols, which contain in condensed form 5 to 15 parts by weight of aromatic monocarboxylic acids and 41 to 52 parts by weight of fatty acids per 100 parts by weight of (solvent-free) resin, characterised in that 30 to 95% by weight of the fatty acids are diene acids and the remainder are monoene acids and saturated acids and that 100 parts by weight of resin contain 10 to 33 parts by weight of conjuene acids, the ratio by weight of monoene acids to conjuene acids being 0.3 : 1 to 1.3 : 1.

2. Alkyd resins according to claim 1, characterised in that they contain in condensed form 6 to 14 parts by weight of aromatic monocarboxylic acids per 100 parts by weight of resin.

3. Alkyd resins according to claims 1 and 2, characterised in that they contain in condensed form 43 to 49 parts by weight of fatty acids.

4. Alkyd resins according to claims 1 to 3, characterised in that 40 to 80% by weight of the fatty acids are diene acids.

5. Alkyd resins according to claims 1 to 4, characterised in that 100 parts by weight of resin contain 15 to 31 parts by weight of conjuene acids.

6. Alkyd resins according to claims 1 to 5, characterised in that the ratio by weight of monoene acids to conjuene acids is 0.45 : 1 to 1.1 : 1.

7. Alkyd resins according to claims 1 to 5, characterised in that 100 parts by weight of resin contain in condensed form 44 to 48 parts by weight of fatty acids and 10 to 13 parts by weight of aromatic monocarboxylic acids, 100 parts by weight of resin containing 22 to 30 parts by weight of conjuene acids and the ratio by weight of monoene acids to conjuene acids being 0.43 : 1 to 0.63 : 1.

**Revendications**

1. Résines alkydes séchant à l'air et moyennes en huile au départ d'acides polycarboxyliques, d'acides monocarboxyliques aromatiques, d'acides gras et de polyols, qui par 100 parties en poids de résine (exempte de solvant) contiennent 5 à 15 parties en poids d'acides monocarboxyliques aromatiques et 41 à 52 parties en poids d'acides gras incorporés par condensation, caractérisés en ce que 30 à 95% en poids des acides gras sont des acides diènes et le restant des acides monoènes et saturés et en ce que 100 parties en poids de résine contiennent 10 à 33 parties en poids d'acides conjuènes, le rapport pondéral des acides monoènes aux conjuènes étant de 0,3 à 1,3.

2. Résines alkydes selon la revendication 1, caractérisées en ce que par 100 parties en poids de résine, elles contiennent 6 à 14 parties en poids d'acides monocarboxyliques aromatiques incorporés par condensation.

3. Résines alkydes selon l'une quelconque des revendications 1 et 2, caractérisées en ce qu'elles contiennent 43 à 49 parties en poids d'acides gras incorporés par condensation.

4. Résines alkydes selon l'une quelconque des revendications 1 à 3, caractérisées en ce que 40 à 80% en poids des acides gras sont des acides diènes.

5. Résines alkydes selon l'une quelconque des revendications 1 à 4, caractérisées en ce que 100 parties en poids de résine contiennent 15−31 parties en poids d'acides conjuènes.

6. Résines alkydes selon l'une quelconque des revendications 1 à 5, caractérisées en ce que le rapport pondéral des acides monoènes aux conjuènes est de 0,45 à 1,1.

7. Résines alkydes selon l'une quelconque des revendications 1 à 5, caractérisées en ce que 100 parties en poids de résine contiennent à l'état incorporé par condensation 44 à 48 parties en poids d'acides gras et 10 à 13 parties en poids d'acides monocarboxyliques aromatiques, 100 parties en poids de résine contenant 22 à 30 parties en poids d'acides conjuènes et le rapport pondéral des acides monoènes aux conjuènes étant de 0,43 à 0,63.